# EUROPEAN PATENT APPLICATION

(11) **EP 1 816 694 A1**
(43) Date of publication of application: **08.08.2007**
(21) Application number: 05787641.9
(22) Date of filing: 27.09.2005
(51) Int. Cl.: H01M 6/14, C22C 24/00, H01M 4/06, H01M 4/40

(54) **NON-AQUEOUS ELECTROLYTE BATTERY**

(30) Priority: 29.09.2004 JP 2004283774
(71) Applicant: TOSHIBA BATTERY CO., LTD., Tokyo 140-0004 (JP)
(72) Inventor: SUZUKI, Masami, Kawasaki-shi, Kanagawa 212-0054 (JP); HANAFUSA, Souichi, Tama-shi, Tokyo 206-0031 (JP); KANO, Koji, Takasaki-shi, Gunma 370-0861 (JP)
(74) Representative: HOFFMANN EITLE
(86) International application number: PCT/JP2005/018231
(87) International publication number: WO 2006/035961

(57) **Abstract**

A non-aqueous electrolyte battery using an oxyhalide as an anodic action material, which can improve pulse discharge characteristics and provide a sufficient operating voltage. A non-aqueous electrolyte battery using an oxyhalide such as thionyl chloride, sulfuric chloride and phosphoryl chloride that are liquid at room temperature as an anodic action material, wherein, in place of a conventionally used metal lithium, a lithium alloy containing at least one kind of element selected from a group consisting of Zn, Ga, Cd, In, Sn, Sb and Bi is used as a cathode to thereby reduce the impedance of a battery and prevent a reduction in operating voltage at pulse discharging, Especially, a battery is obtained that gives a significant improvement effect at high temperature and is excellent in pulse discharge characteristics having long discharge duration days.

## Description

### Field of the invention

The present invention relates to a non-aqueous electrolyte battery using a liquid action material doubled as an electrolyte, and more particularly to a non-aqueous electrolyte battery which can improve pulse discharge characteristics.

### Background of the invention

A non-aqueous electrolyte battery using metal lithium as a negative pole action material and using an oxyhalide such as thionyl chloride, sulfuric chloride and phosphoryl chloride as a positive pole action material, is widely used for example as a backup power source for a memory used in various industrial equipments, for its characteristics of large energy density, of excellent storage and of availability over wide range of temperature.

In this type of battery, a lithium halide produced by the reaction with a positive pole action material, is accumulated on the surface of the metal lithium negative pole, and a protective coating is formed which prevents the metal lithium from over-reacting with the positive pole action material. Accordingly, self-discharging of the battery is controlled so that the battery can keep its battery voltage high for a long term. However, said protective coating formed on the surface of the negative pole happens to excessively grow up under certain usage conditions of battery, and it might result in the increase of the battery impedance. As a result, it causes such a trouble that the battery voltage is decreased temporarily at the beginning of discharge and thereby the equipments using the battery happen to be miss-operated. Particularly, in recent years, the batteries are used increasingly in such a manner that an electric current is flown intensively for an extremely short-term, for instance when pulse discharging, as digital equipments are widely used. Accordingly, the voltage decrease has been requested to be reduced at the beginning of discharge (when pulse discharging).

This phenomenon of said voltage decreasing at the beginning of discharge is called a voltage delay phenomenon in general, because the voltage is recovered again by the destruction of the protective coating as discharge is progressing. The battery using said liquid action material as a positive pole has inherently said phenomenon. Particularly in case that the battery is used under high temperature, the voltage decreasing at the discharging appears remarkably, because the reactivity of a negative pole with a positive pole action material doubled as an electrolyte becomes higher.

Many improvements have been examined to deal with the problem mentioned above, For example, a lithium alloy, such as a lithium with boron, aluminum, calcium, silicon, lead, or magnesium, etc, was proposed to adopt as a negative pole action material (Refer to patent document 1.~4.).

In addition, some proposals were made, wherein vinyl polymer film was coated on the surface of active metallic to prevent the surface of active metallic positive pole from passivating over the period of storage on anode (refer to patent document 5.), and wherein alkyl-2-cyanoacrylate or acryl, substituted acrylic ester polymer, etc was dissoluted in the liquid negative electrode to decrease the passivation of lithium electrode (refer to patent document 6.), and wherein SeO2 or TeO2 was added in the electrolyte to the content of saturated concentration to avoid said voltage delay phenomenon (refer to patent document 7.), and so on.

Although many such improvements as mentioned above had been examined, those are still insufficient, especially in case of pulse discharging for instance, wherein the current is intensively flown at the beginning of discharge. Accordingly it is strongly requested to improve the battery so as to keep enough operating voltage even under the severe condition, particularly such as continuous use of the battery under high temperature.
Patent document 1; JP 60-241653 A
Patent document 2; JP 4-206265 A
Patent document 3; JP 4-206256 A
Patent document 4; JP 2001-118584 A
Patent document 5; JP 61-119936 A
Patent document 6; JP 60-14765 A
Patent document 7; JP 62-43069

### Summary of the invention

The purpose of the present invention being invented in view of aforementioned circumstances is to provide a battery with excellent pulse discharge characteristics.

To accomplish said purpose, the particular feature of the present invention is that a non-aqueous electrolyte battery wherein an oxyhalide such as thionyl chloride, sulfuryl chloride and phosphoryl chloride in a liquid state at normal temperature is used as a positive pole action material, adopts a lithium alloy containing at least one kind of element selected from a group consisting of Zn, Ga, Cd, In, Sn, Sb and Bi as a negative pole in place of a conventionally used metal lithium.

According to the present invention, the impedance increasing of the battery can be avoided by using a lithium alloy which contains the element mentioned above, and thereby the voltage decreasing which appeared so far at the beginning of the discharge, could be controlled. As a result, a battery having excellent pulse discharge characteristics can be provided.

For improving said voltage delay phenomenon, various examinations as mentioned above had been made. However, the inventors of the present invention have examined it by a novel idea for improving the pulse discharge characteristics. That is, the inventors highlighted a lithium negative pole and they examined to control the reaction of a negative pole with a positive pole action material doubled as an electrolyte, by adding an extremely small amount of a metal element to the lithium negative pole and by making it alloy for stabilization.

In detail, aluminum family elements which could easily form a stable alloy layer with lithium were selected, and fusible alloy of Li with Al, Ga and In ware made respectively. Then the batteries using said fusible alloy were constructed and the impedance of the batteries were compared with that of a battery using metal lithium. As a positive pole action material doubled as an electrolyte of the battery, LiAlCl₄ electrolyte was dissolved in thionyl chloride solvent, and moreover polyvinyl chloride was dissolved in the solvent for controlling the surface reaction between the negative pole and the electrolyte.

Accordingly, it was proved that the impedance of the battery apparently decreased by adding of In and Ga. Also it is proved that the more atomic weight of the added element, the effectiveness of the impedance decreasing became more remarkable.

Thereafter, the inventors further examined the possibility of adopting elements except III B family elements in periodic table as a metal element being alloyed with lithium. They constructed batteries which used the element selected among the II B-V B family elements as a negative pole of which atomic weight was more than 65 such as In and Ga which have a remarkable characteristics of impedance decreasing effect, and they evaluated the pulse discharge characteristics of those batteries.

As a result, an alloy of lithium with Zn, Ga, Cd, In Sn, Sb or Bi element showed a remarkable effect in increasing the operating voltage at the pulse discharging in general, and thereby the duration days that the minimum voltage at the pulse discharging reached a predetermined voltage became remarkably longer.

In addition, it was proved that Ga, In, Sn, Sb and Bi showed a remarkable effect among the elements examined, more particularly Bi, Sb and In showed more remarkable effect. Moreover, it was proved that a alloy of lithium with more than two various metal elements showed the similar remarkable effect.

In the present invention, a metal-metal compound is included in the "alloy" used in the specification.

As described above, according to the present invention, a battery that can control a voltage decreasing at the pulse discharging and that can give an excellent pulse discharge characteristics having long discharge duration days, can be provided by adopting a lithium alloy containing at least one kind of element selected from a group consisting of Zn, Ga, Cd, In, Sn, Sb and Bi as a negative pole.

### Brief description of the drawings

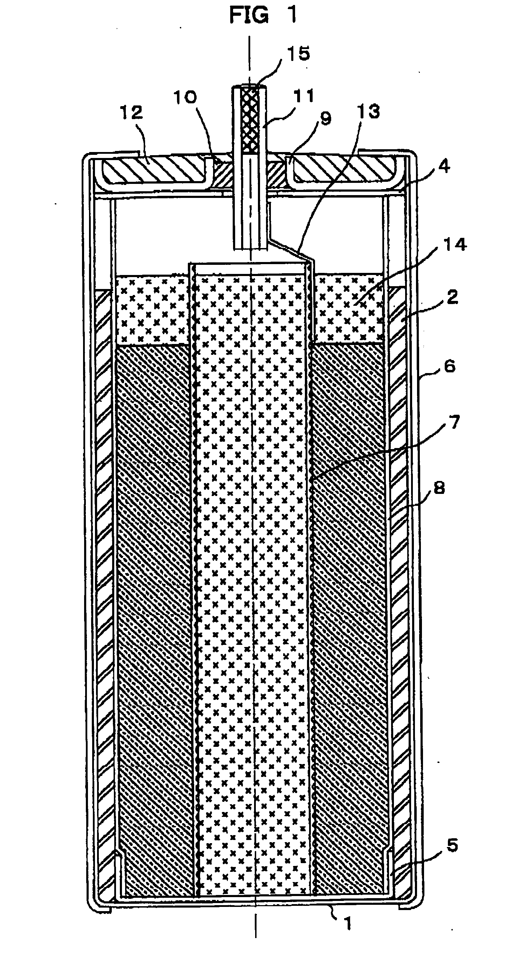

Fig.1 is a cross-section of the battery of examples and comparative examples according to the present invention.

### Description of the reference numeral

1---battery can, 2- --negative pole, 3---porous carbon positive pole, 4 ... brim paper (glass separator), 5... bottom paper (glass separator), 6 --- wrapping tube, 7---positive pole current collector, 8---separator, 9 ... battery cap, 10 --- glass seal, 11---positive pole terminal, 12--- resin seal, 13---lead foil, 14---positive pole action material doubling as electrolyte, 15---seal,

### Description of the preferred embodiment

Hereinafter, a non-aqueous electrolyte battery according to the present invention is described in more detail by reference to the drawing.

### (Example 1)

Fig. 1 shows a cross section of the battery of examples and comparative examples according to the present invention. Also Fig.1 shows a cross section of A size of thionyl chloride lithium battery using a lithium as a negative pole action material and thionyl chloride as a positive pole action material.

In the Fig.1; reference numeral 1 denotes a battery can made of 16mm diameter of stainless steel doubled as a negative pole terminal, and a tubular negative pole 2 is press-bonded to the inner surface of said battery can. Reference numeral 3 denotes a porous carbon positive pole, which is consisting of 45 wt% of acetylene black, 45 wt% of furnace black and 10 wt% of poly-tetra-fluoro-ethylene being kneaded with liquid mixture of water and ethanol, and being formed of 10mm diameter and 36mm height around the positive pole current collector 7, and being vacuum dried during 8 hours at 160 °C. The positive pole current collector 7 is made of an expanded metal of nickel by being formed cylindrically.

In the Fig.1, reference numeral 4, 5 and 8 denotes a separator made of glass fiber non-woven fabric, which separates the positive pole and the negative pole. A battery cap 9 is laser-welded to the upper opening of the battery can 1. At the center of the battery cap 9, a tubular positive pole terminal 11 is electrically insulated by a glass seal 10. The lower end of the positive pole terminal 11 is electrically connected to the positive pole current collector 7 via a lead foil 13.

A positive pole action material doubled as an electrolyte 14 injected through the tubular positive pole terminal 11, is stored in the can 1. The electrolyte is made by dissoluting both 1.2 mol/l of aluminum chloride and 1.2 mol/l of lithium chloride as an electrolyte, in addtion by adding 0.1wt% of polyvinyl chloride. A seal 15 is inserted in the tubular positive pole terminal 11 and laser-welded thereto.

In the figure, reference numeral 12 denotes a resin seal made of epoxy resin, and 6 denotes a wrapping tube made of heat-shrinkable film.

In the example 1, Li-In alloy wherein 0.25 atomic % of In is contained was used as a negative pole 2. ,

### (Example 2)

Li-Ga alloy wherein 0.25 atomic % of Ga is contained was used as a negative pole. Except it, a battery was constructed in the same manner as the example 1.

### (Comparative example 1)

Metallic lithium was used as a negative pole. Except it, a battery was constructed in the same manner as the example 1.

### (Comparative example 2)

Li-Al alloy wherein 0.25 atomic % of Al is contained was used as a negative pole. Except it, a battery was constructed in the same manner as the example 1.

The impedance of those batteries according to the example 1, example 2, comparative example 1 and comparative example 2 are measured at 20°C and 1 kHz of alternating current. Those batteries are kept at 60 °C during 20 days, then the impedance of those batteries are measured at 20 °C again. The result is shown in table 1.

Table 1 clearly shows that the impedance of the batteries according to the example 1 and 2 which use Li-In alloy and Li-Ga alloy respectively as a negative pole is comparatively lower than that of the batteries according to the comparative example 1 and 2 which use metallic lithium and Li-Al alloy respectively as a negative pole.

Next, the impedance of batteries according to the example1, example2, comparative example 1 and comparative example 2 are also measured under the condition that each battery is connected to the 1 kΩ resistor and is made accelerated discharge at 60°C so as the depth of discharge to be 30%.

In addition, the impedance of those batteries being 80% discharged which are kept at 60 °C during 20 days are measured. Table 1 shows the result.

**Table 1**

| | Negative pole | Content of alloyed element (atomic %) | Impedance (Ω) | | | |
|---|---|---|---|---|---|---|
| | | | non-discharged battery | | 80% discharged battery | |
| | | | beginning | 60°C 20days after | beginning | 60°C 20days after |
| Example 1 | LiIn | 0.25 | 2.6 | 18.6 | 1.1 | 16.9 |
| Example 2 | LiGa | 0.25 | 2.7 | 18.8 | 1.3 | 26.7 |
| Comparative example 1 | Li | - | 2.8 | 20.2 | 1.6 | 43.7 |
| Comparative example 2 | LiAl | 0.25 | 3.4 | 19.1 | 1.5 | 36.1 |

At the beginning of discharge, the impedance of every battery is small, however after 20 days at 60 °C, the impedance increasing of the batteries according to the example 1 and 2 which adopt Li-In alloy and Li-Ga alloy respectively as a negative pole is lower than that of the battery according to the comparative example 1 and 2 which adopt metallic lithium and Li-Al alloy respectively as a negative pole. In addition, as to the batteries which were made accelerated discharge to the 30% of the depth of discharge, the difference of the impedance increasing after keeping under high-temperature between the batteries according to the example 1 and 2 and the batteries according to the comparative example 1 and 2 become remarkable, accordingly the superiority and inferiority of the negative pole is clearly appeared. The result that the impedance increasing is small even when the depth of discharge becomes higher is to be an outstanding advantage for practically use of the battery.

According to the experiments described above, it is proved that an excellent battery of which the impedance increasing is small even if being kept under high temperature, can be obtained by using Li-In alloy or Li-Ga alloy as a negative pole.

### (Example 3)

Li-Zn alloy wherein 0.1 atomic % of Zn was contained was used as a negative pole. Except it, a battery was constructed in the same manner as the example 1.

### (Example 4)

Li-Cd alloy wherein 0.1 atomic % of Cd was contained was used as a negative pole. Except it, a battery was constructed in the same manner as the example 1.

### (Example 5)

Li-Sn alloy wherein 0.1 atomic % of Sn was contained was used as a negative pole. Except it, a battery was constructed in the same manner as the example 1.

### (Example 6)

Li-Sb alloy wherein 0.01 atomic % of Sb was contained was used as a negative pole. Except it, a battery was constructed in the same manner as the example 1.

### (Example 7)

Li-Bi alloy wherein 0.08 atomic % of Bi was contained was used as a negative pole. Except it, a battery was constructed in the same manner as the example 1.

As to the batteries according to the example 8-7, the example 1-2 and comparative example 1, pulse discharge experiments were made wherein 25 µA of base current was flown and discharging by 50 mA at every 10 hours was kept for 0.5 second. Then, the duration days, which meant number of days taken until the minimum voltage of the battery became lesser than 3V, was examined.

Table 2 shows the results.

| | Negative pole | Content of alloyed element (atomic %) | Duration days of pulse discharge (days) |
|---|---|---|---|
| Example 1 | LiIn | 0.25 | 38 |
| Example 2 | LiGa | 0.26 | 31 |
| Example 3 | LiZn | 0.1 | 20 |
| Example 4 | LiCd | 0.1 | 21 |
| Example 5 | LiSn | 0.1 | 29 |
| Example 6 | LiSb | 0.01 | 35 |
| Example 7 | LiBi | 0.8 | 44 |
| Comparative example 1 | Li | - | 12 |

Table 2 clearly shows that the duration days of the battery according to the comparative example 1 are 12 days for the minimum voltage being under 3V, on the contrary the duration days of every battery according to the example 1-7 are long such as 20-44 days. Moreover, among those batteries, the duration days of the batteries adopting In, Ga, Sn, Sb or Bi alloy with lithium as a negative pole are longer. Particularly, the batteries adopting In, Sb or Bi alloy with lithium are remarkably excellent because the duration days of them are furthermore longer such as 38, 36 or 44 days respectively.

### (Example 8)

Li-In alloy wherein 0.005 atomic % of In was contained was used as a negative pole. Except it, a battery was constructed in the same manner as the example 1.

### (Example 9)

Li-In alloy wherein 0.015 atomic % of In was contained was used as a negative pole. Except it, a battery was constructed in the same manner as the example 1.

### (Example 10)

Li-In alloy wherein 0.06 atomic % of In was contained was used as a negative pole. Except it, a battery was constructed in the same manner as the example 1.

### (Example 11)

Li-In alloy wherein 0.6 atomic % of In was contained was used as a negative pole. Except it, a battery was constructed in the same manner as the example 1.

### (Example 12)

Li-In alloy wherein 1.2 atomic % of In was contained was used as a negative pole. Except it, a battery was constructed in the same manner as the example 1

### (Example 13)

Li-In alloy wherein 2 atomic % of In was contained was used as a negative pole, Except it, a battery was constructed in the same manner as the example 1.

### (Example 14)

Li-In-Bi alloy wherein 0.015 atomic % of In and 0.008 atomic % of Bi were contained was used as a negative pole. Except it, a battery was constructed in the same manner as the example 1.

### (Example 15)

Li-In-Bi alloy wherein 0.6 atomic % of In and 0.008 atomic % of Bi were contained was used as a negative pole. Except it, a battery was constructed in the same manner as the example 1.

As to the batteries constructed according to the example 8-15, pulse discharge experiments were made wherein 25 µA of base current was flown and discharge by 50 mA at every 10 hours was kept for 0,5 second, then the duration days taken until the minimum voltage of the battery became lesser than 3V, was examined in the same manner mentioned above.

Table 3 shows the results together with the results of example 1 and comparative example 1.

**Table 3**

| | Negative pole | Content of alloyed element(atomic%) | | Duration days of pulse discharge (days) |
|---|---|---|---|---|
| | | In | Bi | |
| Example 8 | LiIn | 0.005 | | 24 |
| Example 9 | LiIn | 0.015 | | 33 |
| Example 10 | LiIn | 0.06 | | 31 |
| Example 1 | LiIn | 0.25 | | 38 |
| Example 11 | LiIn | 0.6 | | 44 |
| Example 12 | LiIn | 1.2 | | 48 |
| Example 13 | LiIn | 2 | | 47 |
| Example 14 | Li-In-Bi | 0.015 | 0.008 | 35 |
| Example 15 | Li-In-Bi | 0.6 | 0.008 | 45 |
| Comparative example 1 | Li | - | - | 12 |

Table 3 clearly shows that the duration days of the battery according to the comparative example 1 are 12 days for the minimum voltage being under 3V. On the contrary, the duration days of the battery according to even the example 8 wherein 0,005 atomic % of In was contained was longer such as 24 days, which showed a remarkable improvement. Moreover, as seen in the batteries according to the example 1 and 8-15, outstanding improvements were recognized over the wide range of composition of alloy. In addition, it was recognized that the more content of In in the alloy the longer duration days.

However, as the additive of In is increased the hardness of Li-In alloy becomes higher, and the negative pole according to the example 12 and 13, wherein the In additive is 1.2 atomic % and 2 atomic % respectively, is rounded tubularly, as a result the working efficiency when press-bonding to the battery becomes little bit worse, The additive of other elements to Li alloy can be selected in consideration of the productivity of the battery.

In addition, as is evident from the results of the experiments according to the example 14 and 15, the Li-In-Bi alloy shows a similar outstanding improvement as well as Li-In alloy and Li-Bi alloy.

As mentioned above, in the battery using a liquid action material, a battery that give an excellent pulse discharge characteristics is obtained by using a lithium alloy containing at least one kind of element selected from a group consisting of Zn, Ga, Cd,

In, Sn, Sb and Bi as a negative pole in place of lithium negative pole.

### Industrial applicability

A non-aqueous electrolyte battery according to the present invention has a remarkable pulse discharge characteristics, thereby the battery can be used in case that the intensive current flow for extremely short-time at the beginning of discharge is required, for instance as a battery used in the digital equipments, particularly under high temperature.

## Claims

1. A non-aqueous electrolyte battery using an oxyhalide as an positive pole action material which is liquid state at room temperature, wherein using a lithium alloy containing at least one kind of element selected from a group consisting of Zn, Ga, Cd, In, Sn, Sb and Bi as a negative pole.

2. A non-aqueous electrolyte battery according to claim 1, wherein a lithium alloy containing at least one kind of element selected from a group consisting of Ga, In, Sn, Sb and Bi.
